# EUROPEAN PATENT SPECIFICATION

(11) **EP 0 418 240 B1**
(45) Date of publication and mention of the grant of the patent: **20.01.1993**
(21) Application number: 88909617.8
(22) Date of filing: 04.11.1988
(51) Int. Cl.: A01K 61/00

(54) **A METHOD AND A MACHINE FOR THE VACCINATION OF FISH**
VORRICHTUNG UND VERFAHREN ZUR IMPFUNG VON FISCHEN
PROCEDE ET MACHINE DE VACCINATION DE POISSONS

(30) Priority: 27.11.1987 NO 874951
(43) Date of publication of application: 27.03.1991
(73) Proprietor: TRIO INDUSTRIER A/S, N-4033 Forus (NO)
(72) Inventor: HELGESEN, Willy, N-4040 Madla (NO); HAUGLAND, Oddmund O., N-4009 Stavanger (NO)
(74) Representative: Patentanwälte Dr. Solf & Zapf
(86) International application number: PCT/NO88/00084
(87) International publication number: WO 89/04601

(56) References cited:
- US-A- 3 229 326
- Norsk Fiskeoppdrett, Vol. 1, 1984, Roger Engeset og Knut Engjom, "Noen erfaringer med stikkvaksinering av laksesmolt", p 20
- Derwent's Abstract No. H1402C/33, SU 706036
- Vakzinationsverfahren und Vakzinearten bei Fischen, eine Literaturübersicht. Diss. Tierärztliche Hochschule, Hannover (FRG). Inst. Mikrobiol. Tierseuchen, 1985, K. Mielke, p. 22

## Description

The present invention relates to a method and a machine for the vaccination of fish, especially trout and salmon fry.

Today, vaccination of fish takes place either by hand or by placing the fish in a bath containing the vaccine.

Manual vaccination of fish is very time-consuming and consequently very expensive, at the same time as the vaccination capacity is too lower in relation to the need. By means of manual vaccination only a small part of the fish fry can thus be vaccinated each year at the breeding extent of today.

"Bathing" of the fish in vaccine-containing water represents a rapid but expensive method. In practice it has been found that it is neither particularly efficient in that only about 60% of the fish become vaccinated.

US-A-3 229 326 relates to an arrangement for the feeding of fish from a vessel containing water to a machine for non-specified fish treatment. The method and machine derivable from this prior patent specification exhibit features which advantageously may be utilized with the vaccination of fishes. Thus, from US-A-3 229 326 a method for treatment of fish is derivable wherein the fishes, which are in a vessel containing water, are conveyed upwards by a conveyor and carried onto a unidirectional device which ensures that the fishes are fed head first in the feeding direction via an edgewise-turner turning the fishes edgewise to said fish treatment machine. The machine known from US-A-3 229 326 comprises a vessel containing water, a conveyor extending downwards into the vessel for conveying fish up from the same. Said conveyor delivers fish to an unidirectional device having self-motion (reciprocal motion, vibration) in the feeding direction of the fish. Said unidirectional device ensures that the fishes are fed head first in the feeding direction to an edgewise-turner coupled after the unidirectional device wherein said unidirectional device having self-motion (reciprocal motion, vibration) comprises longitudinal chutes which in combination with its self-motion turn the fishes, so that laying edgewise they arrive at said fish treatment machine.

In accordance with the present invention one has aimed at eliminating disadvantages of previous vaccination methods and provide an efficient method which allows for rapid and lenient vaccination of each single fish. A machine for carrying out this method is to be reliable, of high capacity and capable of ensuring precision vaccination of the fish.

In accordance with the invention, this can be achieved by the features appearing from the following claims. Features known from US-A-3 229 326 appear in the preamble of claim 1 and 2, respectively.

The method for the vaccination of fish according to the invention thus consists in its broad features in anaesthetizing the fish by placing it briefly in an appropriate bath, from where the fish is transported upwards by means of a suitable conveyor for thereafter to be subjected to unidirectional positioning, preferably followed by edgewise turning, for mechanical vaccination. The invention is based on the knowledge that fish being anaesthetized, sink to the bottom. Thus, the conveyer which with a portion extends substantially paralelly to the bottom of the anaesthetic-containing vessel and adjacent to the bottom of the vessel, will only pick up anaesthetized fish from the vessel, in that fish not yet anaesthelized will keep themselves swimming closer to the surface of the bath. The anaesthesia has primarily the purpose to eliminate movements of the fish when subsequently treated. Each single fish is fed, head first, towards the vaccination device - in order to secure vaccination at the correct spot - laying either on the back or on the belly. There are two groups of opposing, individually activated vaccination means, in that a means in the one group provides for the vaccination of a fish laying on the belly, while a means in the other group provides for the vaccination of a fish laying on the back.

A machine for carrying out the method comprises a anaesthetizing vessel, a conveyor, e.g. a so-called "swan neck" conveyor, extending down into the vessel adjacent to its bottom, for conveying anaesthetized fish up from the vessel to a reciprocating, vibrating unidirectional device which serves to unidirect the fish with the head in front in the direction of advance. Thereafter, the fish arrive by preference at a edgewise-turning device having self-motion and the object of which is to turn the fish with the belly upwards, and from where the fish being conveyed to the vaccination device. As the fish, as mentioned, may be vaccinated also laying back upwards, the edgewise turner is not critical when carrying out the invention in practice. Preferably, the machine is computer-controlled.

The invention is further explained in the following in association with an embodiment of a method for the vaccination of fish in accordance with the invention and with reference to the accompanying drawings, which illustrate a preferred embodiment of a machine for carrying out this method, and wherein:
Figure 1 shows diagrammatically a side view, partly in vertical section, of a machine formed in accordance with the invention;
Figure 2 shows a top plan view of the machine of Figure 1, wherein the vaccination device is omitted;
Figure 3 on a larger scale shows a partial view of the machine of Figures 1 and 2 in the area of and immediately prior to the vaccination device, and wherein further details, i.a. electronic control units, are included.

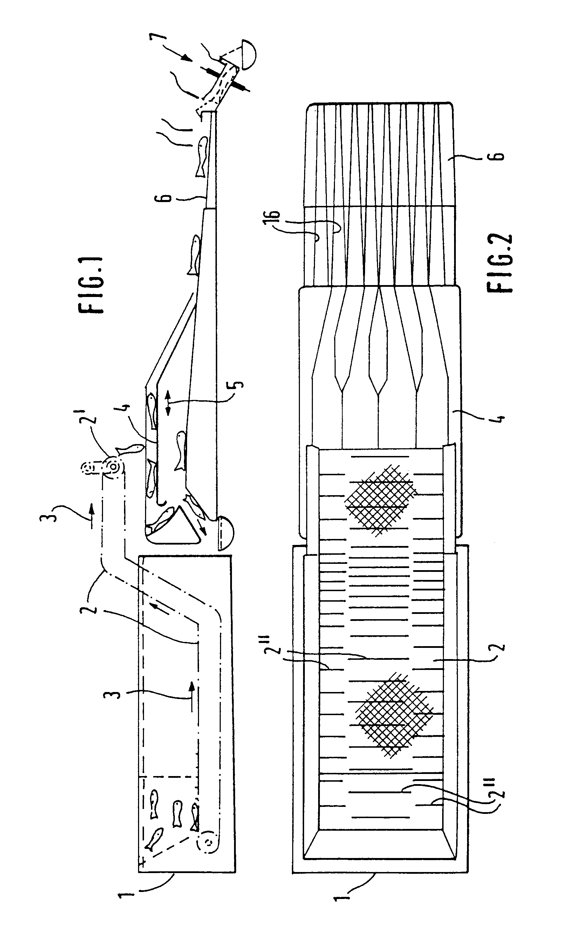

In the drawings, Figures 1 and 2, the reference numeral 1 denotes an anaesthetizing vessel wherein an anaesthetic-containing bath is maintained.

Fishes to be vaccinated are placed in the anaesthetizing bath in the vessel 1. As previously mentioned, fishes being anesthetized, will sink to the bottom of the vessel 1, wherein a so-called "swan-neck"-conveyor 2 is arranged, the direction of movement of which is defined by arrows 3. The conveyor 2 has a course comprising a portion extending paralell to the bottom of the vessel and adjacent the same; an upwardly sloping portion and an adjoining, horizontal portion, the end 2′ of which is located above an unidirectional device 4 having reciprocal self-motion according to the dual arrow 5.

The conveying belt of the conveyor 2 may consist of wire cloth, Figure 2, and is provided with lateral carriers in the form of ledges 2˝. These carrier ledges 2˝ are laterally divided into three, in that the carrier ledge parts are mutually displaced in the longitudinal direction of the conveying belt in relation to adjacent carrier ledge parts. This arrangement of the carrier ledges 2˝ ensures a more uniform supply of fishes to the unidirectional device 4 than with paralell undivided lateral ledges.

The unidirectional device 4 provides in per se known manner for unidirecting the fish so that it during the continued feeding is oriented head first. Fishes not unidirected in this manner, are returned to the anaesthetizing vessel 1 in a manner not shown specifically, confer Figure 1.

From the unidirectional device 4 the fishes arrive at an edgewise-turning device 6 having self-motion (reciprocal motion). The edgewise-turner 6 provides for turning the fish, preferably belly up, and, belly or back up, the fish arrives at a vaccination device 7, which is only indicated in Figure 1 and omitted from Figure 2.

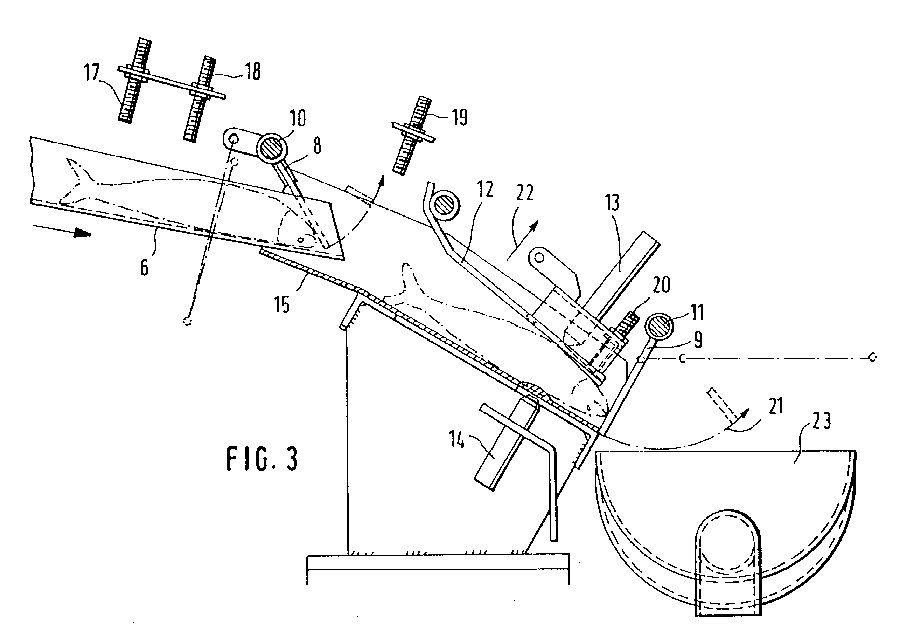

Reference is now being made to Figure 3. At the completion end of the edgewise-turner 6, in front of the vaccination device 7, a flap 8 is arranged and, after the vaccination device 7, a corresponding flap 9. The flaps 8, 9 are pivotable about horizontal shafts 10 and 11, respectively. Starter position for the vaccination device 7 presupposes that the flap 8 extending in the path of motion of the fish, is located in an open or turned-away position, while the flap 9 likewise extending in the fishes' path of motion, occupies a closed position. Furthermore, said starter position presupposes that a pivotable fixation plate 12 is in a turned-up position. The fixation plate 12 serves to fix the fish through resting against the same during vaccination. These turning movements are effected by means of not shown pneumatic pressure cylinders.

The vaccination device 7 comprises a top and bottom group of injection means 13 and 14, respectively. An upper or lower injection means is used depending on whether the fish arrives at the vaccination device laying on the back or laying on the belly, so that the injection i each single case takes place in the belly region.

An electronic control may comprise e.g. eight paralell identical channels or vaccination chambers 15, to which chutes 16 formed in the edgewise-turning device 6 lead.

To each vaccination chamber 15 belong four detectors 17, 18, 19 and 20. The detectors 17 and 18 are located immediately after each other at the completion portion of the edgewise-turner 6, and the detectors 19 and 20 are located respectively at the initiation end of the vaccination chamber 15 and at its completion end.

Each vaccination chamber comprises five control signals relating to flap 8, flap 9, fixation plate 12, upper injection means 13 and lower injection means 14, respectively. All control signals have two conditions, off/on.

Additionally, the electronic plant may count the number of vaccinated fishes per vaccination chamber 15 and the total number of fishes vaccinated. These data are shown on a not shown screen and registered on a not shown printer.

The sequence is as follows:
Detector 17 detects whether fish is present at the controlled area of the edgewise-turner 6. In case it does not detect fish, a new detection is made by means of the detector 17.

Detector 18 is activated subsequent to a minor time delay if the flap 9 is open (turned-up; confer the arrow 21). Detector 18 gives a signal of whether the fish is laying belly or back up.

Thereafter, the flap 9 closes, and the flap 8 opens.

Then detector 19 is activated. When it detects fish, the flap 8 is closed, so that only one fish at the time is received in each vaccination chamber 15. The flap 8 is flexible and follows the body of the fish. The flap 8 may consist of soft rubber and will slide over a fish on its way into a vaccination chamber 15, but will close for the next following fish.

After a minor time delay, the fixation plate 12 is activated and turns downwards against the fish to rest on the same.

Detector 20 is activated and detects when sufficient fixation pressure for the plate 12 is achieved. Thereafter, the fixation plate is maintained at this pressure.

Depending on the directional detection of the detector 18, injection means 13 or 14 is activated, so that the injection takes place in the belly of the fish. In the situation of figure 3, the injection means 13 is activated, as the fish is laying belly up in the vaccination chamber 15.

After effected injection i a vaccination chamber 15, the fixation plate 12 is turned upwards (the arrow 22).

Then, when the detector 20 detects that the fixation pressure of the plate 12 is reduced, the flap 9 is opened so that the vaccinated fish falls into a water chute 23 or another device for further transport.

Thereby, one sequence is completed, and a new sequence is started.

A vaccination machine of the design shown using eight paralell identical vaccination chambers will have a vaccination capacity of 200-300 fishes a minute.

## Claims

1. A method for the vaccination of fishes, especially trout and salmon fry, wherein the fishes to be treated are in a vessel containing water and wherefrom they are conveyed upwards by a conveyor and carried onto an unidirectional device which ensures that the fishes are fed head first in the feeding direction via an edgewise-turner turning the fishes edgewise to a fish treatment device, characterized in that first the fishes are anaesthetized in a vessel (1) containing water admixed anaesthetic and sink to the bottom of the vessel, and that the fishes, following the above-mentioned unidirectional and edgewise-turning operations, one by one is carried into a vaccination chamber (15) having injection means (13, 14) for individual vaccination of the fishes.

2. A machine for carrying out the method defined in claim 1, comprising a vessel (1) containing water, a conveyor (2) extending downwards into the vessel (1) for conveying fish up from the same, said conveyor (2) delivering fish to an unidirectional device (4) having self-motion (reciprocal motion, vibration) in the feeding direction of the fish, said unidirectional device (4) being adapted to ensure that the fishes are fed head first in the feeding direction to an edgewise-turner (6) coupled after the unidirectional device, said edgewise-turner having self-motion (reciprocal motion, vibration) and comprising longitudinal chutes (16) which in combination with its self-motion are adapted to turn the fishes, so that laying edgewise they arrive at a fish treatment device, characterized in that the vessel (1) contains an anaesthetizing bath, and that said fish treatment device comprises at least one vaccination chamber (15), which is provided with injection means (13, 14) for the vaccination of the fishes individually.

3. Machine as defined in Claim 2, characterized in that it comprises a plurality of mutually paralell vaccination chambers (15) paralell to the feeding direction of the fish and corresponding to the longitudinal chutes (16) formed in the edgewise-turner (6).

4. Machine as defined in Claim 2 or 3, characterized in that the conveyor (2) is a so-called "swan-neck"-conveyor having a first substantially horizontal portion extending along the bottom of the anaesthetizing vessel (1), and whereto is joined an upwardly sloping portion the upper end of which is located above the level of the bath and whereto is joined a substantially horizontally extending portion the end of which is located above the unidirectional device (4).

5. Machine as defined in Claim 2, 3 or 4, characterized in that the conveyor, the conveying belt of which e.g. may consist of wire cloth, has lateral carriers (2˝) each extending over a limited portion of the conveying belt's width, and which are displaced in the longitudinal direction of the conveying belt in relation to adjacent carriers (2˝), for thereby to ensure a more uniform supply of fishes to the unidirectional device (4).

6. Machine as defined in any of the preceding Claims 2 - 5, characterized in that, both upstreams and downstreams of the vaccination chamber or each vaccination chamber, respectively, a pivotable flap (8, 9, respectively ) is arranged, said flaps being operated by means of power-driven means, e.g. pneumatic pressure cylinders, and controlled by means of electronic detectors (18-20) located at the completion portion of the edgewise-turner (6) and at the completion end of the vaccination chamber (15).

7. Machine as defined in Claim 6, characterized in that the vaccination chamber or each vaccination chamber (15), respectively, is provided with a pivotable fixation plate (12) adapted to rest against and fix one fish in the vaccination chamber (15), said fixation plate (12) being operated by means of a power-driven means, e.g. a pneumatic pressure cylinder, and associated with an electronic detector (20), which is located at the completion end of the vaccination chamber (15) and adpated to react to the fixation pressure of the fixation plate (12), in order to, at reduced pressure - following vaccination - to operate the flap (9) located downstreams of the vaccination chamber (15) for its turning away (arrow 21), so that vaccinated fish may leave the machine and fall into a water chute (23) or other device for further transport.

8. Machine as defined in Claim 6, characterized in that upstreams of the vaccination chamber or each vaccination chamber (15), respectively, two electronic detectors (17, 18) are arranged, one after the other in the feeding direction of the fish, and wherein the first detector (17) is adapted to detect whether fishes are present in the controlled area, and wherein the second detector (18), which is activated after a minor time delay in relation to the first detector (17), is adapted to register and deliver a signal if the fish is laying belly or back up.

9. Machine as defined in Claim 6, characterized in that the pivotable flap (8) upstreams of the vaccination chamber (15) is made of flexible material, e.g. soft rubber, so that it may slide over a fish in the act of moving into the vaccination chamber (15), but which will close for the next following fish.

10. Machine as defined in any of the preceding Claims 2 - 9, characterized in that the vaccination chamber or each vaccination chamber (15), respectively, is provided with two opposing injection means (13, 14) for the vaccination of fish laying belly up or back up, respectively, so that the injection in each single case takes place in the belly region of the fish.

## Patentansprüche

1. Verfahren zur Impfung von Fischen, insbesondere von Forellen- und Lachsbrut, wobei sich die zu behandelnden Fische in einem Wasser enthaltenden Behälter befinden, von wo sie durch ein Fördermittel nach oben gefördert und auf einer in eine Richtung verlaufende Vorrichtung befördert werden, die sicherstellt, daß die Fische Kopf voran in die Zufuhrrichtung über ein Kantenausrichtungsmittel zugeführt werden, welche die Fische hochkant zu einer Fischbehandlungsvorrichtung ausrichtet,
dadurch **gekennzeichnet,**
daß die Fische zunächst in einem Behälter (1) betäubt werden, der ein mit Wasser versetztes Betäubungsmittel enthält und auf den Boden des Behälters sinken, und daß die Fische, den vorstehend genannten in eine Richtung verlaufenden und kantenausrichtenden Behandlungen folgend, einer nach dem anderen in eine Impfkammer (15) befördert werden, die Spritzeinrichtungen (13, 14) zur individuellen Impfung des Fisches aufweisen.

2. Vorrichtung zur Durchführung des Verfahrens nach Anspruch 1, mit einem Wasser enthaltenden Behälter (1), einem Fördermittel (2), das nach unten in den Behälter (1) verläuft, um Fisch aus diesem heraus zu fördern, wobei das Fördermittel (2) Fisch an eine in eine Richtung verlaufende Vorrichtung (4) liefert, die in der Zufuhrrichtung des Fisches eine Eigenbewegung (hin- und hergehende Bewegung, Schwingung) aufweist, wobei die in eine Richtung verlaufende Vorrichtung (4) dazu ausgelegt ist, sicherzustellen, daß die Fische Kopf voran in der Zufuhrrichtung an ein Kantenausrichtungsmittel (6) zugeführt werden, das der in eine Richtung verlaufenden Vorrichtung nachgeschaltet ist, wobei das Kantenausrichtungsmittel eine Eigenbewegung (hin- und hergehende Bewegung, Schwingung) aufweist und eine längliche Rutsche (16) umfaßt, die kombiniert mit seiner Eigenbewegung dazu ausgelegt sind, die Fische auszurichten, so daß sie hochkant liegend an einer Fischbehandlungsvorrichtung anlangen,
dadurch **gekennzeichnet**,
daß der Behälter (1) ein Betäubungsmittelbad enthält, und daß die Fischbehandlungsvorrichtung wenigstens eine Impfkammer (15) umfaßt, die zur individuellen Impfung der Fische mit Spritzeinrichtungen (13, 14) versehen ist.

3. Vorrichtung nach Anspruch 2,
dadurch **gekennzeichnet**,
daß sie eine Mehrzahl von zueinander parallelen Impfkammern (15) umfaßt, die parallel zur Zufuhrrichtung des Fisches verlaufen und den länglichen Schütten (16) entsprechend, die in dem Kantenausrichtungsmittel (6) ausgebildet sind.

4. Vorrichtung nach Anspruch 2 oder 3,
dadurch **gekennzeichnet**,
daß das Fördermittel (2) ein sogenannter "Schwanenhals"-Förderer ist, der einen ersten, im wesentlichen waagerechten Abschnitt aufweist, der entlang des Bodens des Betäubungsmittelbehälters (1) verläuft, und an den ein nach oben geneigter Abschnitt angesetzt ist, dessen oberes Ende über dem Pegel des Bads angeordnet ist, und an den eine im wesentlichen waagerecht verlaufender Abschnitt angesetzt ist, dessen Ende über der in einer Richtung verlaufenden Vorrichtung (4) angeordnet ist.

5. Vorrichtung nach Anspruch 2, 3 oder 4,
dadurch **gekennzeichnet**,
daß das Fördermittel, dessen Förderband z.B. aus einem Drahtgewebe bestehen kann, seitliche Träger (2˝) aufweist, von denen jeder sich über einen begrenzten Abschnitt der Fördermittelband-Breite erstreckt, und die in der Längsrichtung des Fördermittelbandes in bezug auf benachbarte Träger (2˝) versetzt sind, um dadurch eine gleichmäßigere Zufuhr von Fischen zu der in einer Richtung verlaufenden Vorrichtung (4) sicher zu stellen.

6. Vorrichtung nach einem der vorhergehenden Ansprüche 2 bis 5,
dadurch **gekennzeichnet**,
daß sowohl stromaufwärts wie stromabwärts von der Impfkammer oder jeder Impfkammer eine schwenkbare Klappe (8 bzw. 9) angeordnet ist, wobei die Klappen mittels einer kraftbetriebenen Einrichtung, z.B. pneumatische Druckzylinder, angetrieben und mittels elektronischer Detektoren (18 - 20) gesteuert ist, die am Komplettierungsabschnitt des Kantenausrichtungsmittels (6) und am Komplettierungsende der Impfkammer (15) angeordnet sind.

7. Vorrichtung nach Anspruch 6,
dadurch **gekennzeichnet,**
daß die Impfkammer oder jede Impfkammer (15) mit einer schwenkbaren Fixierplatte (12) versehen ist, die dazu ausgelegt ist, gegen einen Fisch in der Impfkammer (15) zur Anlage zu kommen und diesen zu fixieren, wobei die Fixierplatte (12) mittels einer kraftbetriebenen Einrichtung, z.B. einem pneumatischen Druckzylinder, angetrieben ist und mit einem elektronischen Detektor (20) zusammenarbeitet, der am Komplettierungsende der Impfkammer (15) angeordnet und dazu ausgelegt ist, auf den Fixierdruck der Fixierplatte (12) zu reagieren, um bei vermindertem Druck - auf die Impfung folgend - die Klappe (9) zu betätigen, die stromabwärts von der Impfkammer (15) für ihr Aufschwenken (Pfeil 21) angeordnet ist, so daß geimpfter Fisch die Vorrichtung zu verlassen und in die Wasserrutsche (23) oder eine andere Vorrichtung für einen weiteren Transport zu fallen vermag.

8. Vorrichtung nach Anspruch 6,
dadurch **gekennzeichnet**,
daß stromaufwärts von der Impfkammer oder von jeder Impfkammer (15) zwei elektronische Detektoren (17, 18), einer nach dem andern in der Zufuhrrichtung des Fisches, angeordnet sind, und wobei der erste Detektor (17) dazu ausgelegt ist, zu ermitteln, ob in dem überwachten Bereich Fische vorhanden sind, und wobei der zweite Detektor (18), der nach einer geringen Zeitverzögerung in bezug auf den ersten Detektor (17) aktiviert wird, dazu ausgelegt ist, ein Signal anzuzeigen und abzugeben, wenn der Fisch mit dem Bauch oder dem Rücken nach oben liegt.

9. Vorrichtung nach Anspruch 6,
dadurch **gekennzeichnet**,
daß die schwenkbare Klappe (8) stromaufwärts von der Impfkammer (15) aus einem biegsamen Material, z.B. Weichgummi, besteht, so daß sie über einen Fisch, beim Vorgang der Bewegung in die Impfkammer (15) hinein, zu gleiten vermag, während sie sich jedoch für den nachfolgenden Fisch schließt.

10. Vorrichtung nach einem der Ansprüche 2 bis 9,
dadurch **gekennzeichnet**,
daß die Impfkammer oder jede Impfkammer (15) mit zwei einander gegenüberstehenden Spritzeinrichtungen (13, 14) für die Impfung von auf dem Bauch oder dem Rücken liegenden Fisch versehen ist, so daß die Impfung in jedem einzelnen Fall in der Bauchregion des Fisches stattfindet.

## Revendications

1. Procédé de vaccination de poissons, notamment d'alevins de truites et de saumons, dans lequel les poissons à traiter sont placés dans un réservoir contenant de l'eau et à partir duquel ils sont transportés vers le haut par un transporteur, puis transportés sur un dispositif unidirectionnel qui assure la transmission des poissons la tête la première dans la direction d'avance, avec un organe de retournement latéral qui retourne les poissons sur le bord vers un dispositif de traitement de poissons, caractérisé en ce que les poissons sont d'abord anesthésiés dans un réservoir (1) contenant de l'eau à laquelle un anesthésique a été mélangé et plongent au fond du réservoir, et en ce que les poissons, après les opérations unidirectionnelles et de retournement sur le bord précité, sont transportés un à un dans une chambre de vaccination (15) ayant un dispositif (13, 14) d'injection assurant la vaccination individuelle des poissons.

2. Machine destinée à la mise en oeuvre du procédé selon la revendication 1, comprenant un réservoir (1) qui contient de l'eau, un transporteur (2) qui descend dans le réservoir (1) afin qu'il transporte les poissons vers le haut à partir de celui-ci, le transporteur (2) transmettant les poissons à un dispositif unidirectionnel (4) à déplacement autonome (déplacement alternatif, vibration) dans la direction d'avance des poissons, le dispositif unidirectionnel (4) étant destiné à assurer l'avance des poissons la tête la première dans la direction d'avance vers un organe (6) de retournement sur le bord couplé au dispositif unidirectionnel, l'organe de retournement sur le bord ayant un fonctionnement automatique (mouvement alternatif, vibration) et comprenant des goulottes longitudinales (16) qui, en combinaison avec le mouvement propre, sont destinées à retourner les poissons afin qu'ils soient placés sur le bord lorsqu'ils arrivent à un dispositif de traitement de poissons, caractérisée en ce que le réservoir (1) contient un bain anesthésiant, et en ce que le dispositif de traitement des poissons comporte au moins une chambre de vaccination (15) qui comporte un dispositif (13, 14) d'injection du vaccin aux poissons individuellement.

3. Machine selon la revendication 2, caractérisée en ce qu'elle comporte plusieurs chambres parallèles (15) de vaccination qui sont parallèles à la direction d'avance des poissons et qui correspondent aux goulottes longitudinales (16) formées dans l'organe (6) de retournement sur le bord.

4. Machine selon la revendication 2 ou 3, caractérisée en ce que le transporteur (2) est un transporteur à "col de cygne" ayant une première partie sensiblement horizontale disposée le long du fond du réservoir anesthésiant (1) et à laquelle est raccordée une partie qui remonte dont l'extrémité supérieure est placée au-dessus du niveau du bain et à laquelle se raccorde une partie sensiblement horizontale dont l'extrémité se trouve au-dessus du dispositif unidirectionnel (4).

5. Machine selon la revendication 2, 3 ou 4, caractérisée en ce que le transporteur, dont la courroie transporteuse peut être formée par exemple d'une étoffe métallique, possède des organes latéraux de transport (2˝) disposés chacun sur une partie limitée de la largeur de la courroie de transport et qui sont décalés dans la direction longitudinale de la courroie de transport par rapport à des organes adjacents de transport (2˝) afin qu'une alimentation en poissons très uniforme du dispositif unidirectionnel (4) soit assurée.

6. Machine selon l'une quelconque des revendications 2 à 5, caractérisée en ce que, en amont et en aval de la chambre ou de chaque chambre de vaccination, un volet pivotant (8, 9 respectivement) est disposé, les volets étant commandés par un dispositif à moteur, par exemple à vérin pneumatique, et étant commandés par des détecteurs électroniques (18-20) placés dans la partie finale de l'organe (6) de retournement sur le bord et à l'extrémité finale de la chambre de vaccination (15).

7. Machine selon la revendication 6, caractérisée en ce que la chambre ou chaque chambre de vaccination (15) a une plaque pivotante (12) de fixation destinée à être en appui contre un poisson qui se trouve dans la chambre de vaccination (15) et à le fixer, la plaque de fixation (12) étant manoeuvrée par un dispositif à moteur, par exemple un vérin pneumatique, et étant associée à un détecteur électronique (20) qui est placé à l'extrémité finale de la chambre de vaccination (15) et qui est destiné à réagir à la pression de fixation de la plaque de fixation (12) afin que, à une pression réduite, après la vaccination, il commande le volet (9) placé en aval de la chambre de vaccination (15) de manière qu'il tourne (flèche 21), si bien que le poisson vacciné peut quitter la machine et peut tomber dans une goulotte (23) à eau ou un autre dispositif assurant un transport ultérieur.

8. Machine selon la revendication 6, caractérisée en ce que, en amont de la chambre ou de chaque chambre de vaccination (15), deux détecteurs électroniques (17, 18) sont disposés l'un après l'autre dans la direction d'avance des poissons, et le premier détecteur (17) est destiné à détecter si des poissons sont présents dans la zone contrôlée alors que le second détecteur (18), qui est activé après un petit retard par rapport au premier détecteur (17), est destiné à enregistrer et transmettre un signal lorsque le poisson est sur le dos ou sur le ventre.

9. Machine selon la revendication 6, caractérisée en ce que le volet pivotant (8) placé en amont de la chambre de vaccination (15) est formé d'un matériau flexible, par exemple de caoutchouc souple, afin qu'il puisse glisser sur un poisson lors du déplacement dans la chambre de vaccination (15) mais qu'il ferme le passage pour le poisson suivant.

10. Machine selon l'une quelconque des revendications précédentes 2 à 9, caractérisée en ce que la chambre ou chaque chambre de vaccination (15) a deux dispositifs opposés d'injection (13, 14) destinés à assurer la vaccination des poissons qui ont le ventre en l'air ou le dos en l'air respectivement, si bien que l'injection est réalisée dans tous les cas dans la région du ventre du poisson.
